(19) Europäisches Patentamt / European Patent Office / Office européen des brevets

(11) EP 1 713 743 B1

(12) # FASCICULE DE BREVET EUROPEEN

(45) Date de publication et mention de la délivrance du brevet:
**16.09.2009 Bulletin 2009/38**

(21) Numéro de dépôt: **05706368.7**

(22) Date de dépôt: **07.02.2005**

(51) Int Cl.:
***C04B 35/106*** *(2006.01)* ***B02C 15/00*** *(2006.01)*
***B02C 17/20*** *(2006.01)* ***C04B 35/119*** *(2006.01)*

(86) Numéro de dépôt international:
**PCT/BE2005/000016**

(87) Numéro de publication internationale:
**WO 2005/075375 (18.08.2005 Gazette 2005/33)**

(54) **BILLES DE BROYAGE ET LEUR PROCEDE DE FABRICATION**

MAHLKUGELN UND HERSTELLUNGSVERFAHREN DAFÜR

GRINDING BALLS AND PRODUCTION METHOD THEREOF

(84) Etats contractants désignés:
**AT BE BG CH CY CZ DE DK EE ES FI FR GB GR HU IE IS IT LI LT LU MC NL PL PT RO SE SI SK TR**

(30) Priorité: **10.02.2004 EP 04447035**

(43) Date de publication de la demande:
**25.10.2006 Bulletin 2006/43**

(73) Titulaire: **MAGOTTEAUX INTERNATIONAL S.A.**
**4051 Vaux-sous-Chèvremont (BE)**

(72) Inventeurs:
- **BOULANGER, Louis**
**B-4845 TIEGE (BE)**
- **DESILES, Stéphane**
**B-4031 ANGLEUR (BE)**

(74) Mandataire: **pronovem**
**Office Van Malderen**
**Boulevard de la Sauvenière 85/043**
**4000 Liège (BE)**

(56) Documents cités:
**EP-A- 0 811 586** **DE-A1- 4 201 615**
**US-A- 3 679 383** **US-A- 4 343 751**
**US-A- 4 430 279** **US-B1- 6 616 873**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 713 743 B1

## Description

### Objet de l'invention

La présente invention se rapporte au domaine du broyage de matières minérales ou organiques et en particulier à des billes sphéroïdes en céramique frittée utilisées dans les broyeurs à agitation, du type attriteur ou autres, pour la réduction, dispersion et réactivation des particules dans un processus en voie sèche et/ou en voie humide.

### Etat de la technique et introduction

Les équipements et procédés de broyage fin et la dispersion en voie sèche et humide sont bien connus de l'homme de métier et développés dans des industries telles que :

- l'industrie minérale avec broyage fin des particules pré broyées par utilisation des procédés traditionnels,
- les industries de peinture, des encres, des laques, des composés agrochimiques ainsi que pour la dispersion et l'homogénéisation de liquides et de constituants solides variés.

Dans la plupart des cas, ces équipements et procédés utilisent des corps de dispersion ou de broyage de forme essentiellement sphérique et de petits diamètres (en général inférieurs à 10mm).

Depuis peu, le broyage fin et ultra fin est devenu un pôle de développement essentiel dans les industries minières, avec la nécessité de s'approvisionner en corps broyants économiques.

Le broyeur à agitation peut être décrit de la manière suivante : il est composé d'une chambre cylindrique positionnée horizontalement ou verticalement contenant des petites billes de 0,5 à 12mm de diamètre en fonction des finesses souhaitées pour le produit fini. Dans cette chambre tourne un axe comportant des disques. Ces disques communiquent le mouvement à la charge broyante et à la matière à broyer. Le mouvement de l'ensemble permet la dispersion de la matière à broyer entre les billes de broyage qui ont pour rôle de réduire ladite matière jusqu'à une finesse prédéterminée. La granulométrie obtenue est alors fonction de l'énergie injectée dans la machine.

Ce procédé de broyage peut se faire en voie humide et en voie sèche de manière continue, avec alimentation et décharge de la matière à broyer, ou en batch, c'est-à-dire dans une chambre cylindrique complètement fermée.

Les corps broyants sont évidemment eux-mêmes soumis à l'usure et leur sélection dépendra des critères suivants:

- inertie chimique envers les produits broyés ou dispersés,
- résistance aux impacts mécaniques,
- résistance à l'usure,
- usure provoquée sur l'équipement interne du broyeur ou du disperseur,
- sa densité, une densité élevée conditionne un bon rendement de broyage,
- l'absence de porosité ouverte, celle-ci entraînant l'usure rapide des billes de broyage,
- une sphéricité acceptable.

Sur le marché, on rencontre un nombre limité de corps utilisés dans les broyeurs à agitation ou dans les disperseurs :

- sable à grains arrondis (quartz, zircon),
- billes de verre,
- billes métalliques,
- billes en céramique fondue, (électro-fondue)
- billes en céramique frittée.

Le sable à grains arrondis est un produit naturel et bon marché. Sa faible résistance aux impacts mécaniques, sa faible densité, les variations dans sa qualité (inhomogénéité des gisements), son abrasivité envers les équipements internes des broyeurs à agitation et disperseurs constituent ses limitations dans les applications.

Les billes de verre, largement utilisées pour suppléer aux faiblesses du sable à grains arrondis, s'avèrent moins efficaces dans les applications de broyages ou dispersions demandant des billes à haute résistance mécanique et à haute résistance à l'usure. Leur densité faible de 2.5 g/cm$^3$ est aussi une caractéristique qui limite leur utilisation lorsque l'efficacité de broyage est un élément important du processus.

Les billes métalliques s'avèrent moins efficaces pour les raisons suivantes :

- elles sont insuffisamment inertes chimiquement envers les produits broyés ou dispersés,
- leur densité excessivement élevée entraîne une consommation élevée d'énergie et un échauffement élevé des équipements internes des broyeurs/agitateurs.

Les billes en céramiques par contre ont une meilleure résistance mécanique que les billes de verre, une densité intermédiaire entre les billes de verre et les billes métalliques ainsi qu'une bonne inertie chimique envers les produits broyés ou dispersés.

Selon les procédés de fabrication, les billes en céramique sont classées en deux familles :

- les billes en céramique fondue, obtenues par fusion des composés céramiques à très haute température (+/- 2000°C) et solidifiées sous forme de gouttelettes,
- les billes en céramique frittées, obtenues par mise en forme à froid des composés céramiques et consolidation de ceux-ci par un frittage à haute température (+/-1500°C).

Suivant les composés céramiques mis en forme, les billes en céramique frittée sont classées en quatre familles :

- billes en alumine (teneur en $Al_2O_3 \geq 90\%$),
- billes en silicate d'alumine (mullite ou autres),
- billes en alumine-zircone (85 à 95% $Al_2O_3$ - 15 à 5% $ZrO_2$),
- billes en zircone stabilisée ou partiellement stabilisée à l'aide d'oxyde d'yttrium, de cérium ou de magnésium entre autre.

Les compositions de mullite/zircone ainsi que de mullite/alumine/zircone ont généralement été étudiées dans le contexte des briques réfractaires pour l'utilisation des fours de verrerie.

G. Orange et F. Cambier étudient dans leur publication « High temperature mechanical properties of reaction-sintered mullite/zirconia and mullite/alumina/ zirconia composites » (Journal of Materials Science 20 (1985)2533-2540) la résistance à la rupture de tels composés ainsi que la résistance aux chocs à haute température (1000°C) pour l'utilisation de ces composés dans des applications structuelles telles que des fours de verrerie.

La problématique des billes de broyage est cependant très différente. Ces billes doivent être beaucoup plus lisses que les briques réfractaires dans la mesure où la simple présence d'angles sur les corps broyants, peut réduire de 50% la durée de vie des équipements internes des attriteurs ce qui conduit à des coûts de maintenance qui rendent impossible l'utilisation de corps broyants à rugosité élevée.

Le fini de surface des billes de broyage est donc très important car il influence directement l'usure interne de l'équipement et la qualité de broyage. Ledit fini de surface est aussi directement influencé par la composition chimique et le procédé de fabrication desdites billes.

Des billes de broyage en alumine et zircone electrofondus sont respectivement divulguées dans les brevets américains US 3,486,706 et US 5,502,012. Ces documents revendiquent des phases vitreuses particulières.

La demande de brevet EP-0662461 A1 divulgue des billes en matière céramique formées par fusion d'un mélange de zircone et de silice et étudie l'influence de la présence des oxydes d'Yttrium et de Cérium.

Le document EP 1167320 A1 présente des produits en alumine-zircone-silice fondus et coulés en blocs et de coût réduit pour l'utilisation dans les régénérateurs de fours de verrerie ou dans les superstructures.

Toutes les billes de broyage comprenant de la silice, de l'alumine ou de la zircone ont comme point commun qu'elles ont été réalisées par fusion ce qui nécessite l'accès à des températures supérieures à **2**000**°**C ce qui est techniquement difficile et donc coûteux. Par contre, aucun de ces documents ne divulgue des billes de broyage en céramique frittée, comprenant à la fois de la silice, de l'alumine et de la zircone. Ce procédé peut être réalisé à environ 1500°C ce qui est beaucoup plus facile sur le plan technologique et donc moins coûteux.

## Buts de l'invention

La présente invention vise à fournir des billes de broyage en céramique frittée d'une composition particulière avec une bonne ténacité et une bonne résistance à l'usure à froid pour l'utilisation dans les broyeurs de matières minérales ou organiques. Elle vise en outre à fournir un procédé de fabrication de telles billes.

## Résumé et éléments caractéristiques de l'invention

La présente invention divulgue des billes de broyage en céramique frittée comportant les composés suivants (en % massique) :

- 18 à 50% de mullite ($3Al_2O_3.2SiO_2$)
- 9 à 25% de zircone ($ZrO_2$ + $HfO_2$) stabilisée par 0.5 à 3% d'oxyde de terres rares
- 25 à 72% d'alumine ($Al_2O_3$).

Selon des modes particuliers de réalisation, l'invention comporte l'une ou plusieurs des caractéristiques suivantes :

- lesdits composés sont essentiellement obtenus à partir de matières premières comportant du zircon ($ZrSiO_4$) et de l'alumine ($Al_2O_3$).
- Ladite céramique comprend en outre 1 à 5 % en poids d'oxydes sélectionnés parmi le groupe des $Na_2O$, MgO, CaO et BaO.
- ladite zircone est stabilisée par 0,5 à 3% en poids de $Y_2O_3$.
- l'analyse chimique (fluorescence X, spectromètre plasma ICP) desdites billes montre par ailleurs la présence des oxydes suivants (en % massique):

- 9 à 25% $ZrO_2$ + $HfO_2$,
- 0.5 à 3% $YaO_3$,
- 5 à 12% $SiO_2$,
- 60 à 85% $Al_2O_3$, avec un rapport $ZrO_2/SiO_2$ supérieur ou égal à 2.
- les billes de broyage ont un diamètre entre 0.1 et 100mm, de préférence entre 0.5 et 50mm et de manière particulièrement préférée entre 0.5 et 10mm.

La présente invention divulgue en outre un procédé de fabrication de billes de broyage en céramique frittée comprenant les étapes suivantes :

- mélange et/ou broyage des matières premières en voie sèche et/ou humide pour constituer une barbotine avec ajouts éventuels de liants et/ou de surfactants organiques;
- passage de ladite barbotine par un moyen ou un procédé de granulation;
- sélection par tamisage des billes obtenues avec reconduction des billes de granulométrie inadéquate en amont via une étape de séchage et/ou de broyage éventuelle vers le mélangeur;
- séchage des billes de granulométrie adéquate ;
- frittage des billes de granulométrie adéquate entre 1400°C et 1600°C suivi d'une étape de conditionnement.

L'invention précise par ailleurs que lors de l'étape de sélection, les moyens de granulation comprennent des granulateurs à lit fluidisé et des disques de granulation.

L'invention montre aussi qu'une nébulisation d'eau a lieu sur le disque de granulation lors de l'étape de sélection, pour aboutir à des billes de broyage avant frittage comportant 18 à 22 % d'eau.

Par ailleurs, les granulés peuvent également être obtenus par des procédés de gélification ou des procédés de moulage par injection.

L'invention précise également que lesdits liants organiques sont choisis parmi le groupe des polysaccharides, des polymères thermoplastiques, thermodurcissables ou à base de solvants aqueux ou organiques.

Avantageusement, lesdits surfactants sont choisis parmi le groupe des acides carboxyliques tels que l'acide stéarique ou l'acide oléique et/ou des polyélectrolytes tels que le polymethylacrilate d'ammonium.

Par ailleurs, l'invention divulgue l'utilisation des billes de broyage en céramique frittée selon la revendication 1 pour le broyage de matières minérales ou organiques.

## Brève description des figures

La figure 1 représente une image des billes de la présente invention avec des granulométries différentes.

La figure 2 représente un schéma de broyage permettant de tester les performances des billes de l'invention et de les comparer aux performances des billes de l'art antérieur.

La figure 3 représente une comparaison entre les billes de l'invention et les échantillons de l'art antérieur A et B sur le paramètre du temps de broyage.

La figure 4 représente une comparaison entre les billes de l'invention et les échantillons de l'art antérieur A et B sur le paramètre de l'Energie consommée.

La figure 5 représente une comparaison entre les billes de l'invention et les échantillons de l'art antérieur H et G sur le paramètre du temps de broyage.

La figure 6 représente une comparaison entre les billes de l'invention et les échantillons de l'art antérieur H et

G sur le paramètre de l'énergie consommée.

La figure 7 représente une comparaison entre les billes de l'invention et les échantillons de l'art antérieur C et D sur le paramètre du temps de broyage.

La figure 8 représente une comparaison entre les billes de l'invention et les échantillons de l'art antérieur C et D sur le paramètre de l'énergie consommée.

La figure 9 représente une comparaison entre les billes de l'invention et l'échantillon de l'art antérieur E sur le paramètre du temps de broyage.

La figure 10 représente une comparaison entre les billes de l'invention et l'échantillon de l'art antérieur E sur le paramètre de l'énergie consommée.

## Description détaillée de l'invention

L'invention concerne des billes en céramique frittée, composées d'alumine-zircone-silicate d'alumine et en particulier d'alumine-zircone-mullite. La qualité de ces billes est supérieure aux billes en alumine, en silicate d'alumine ou en alumine-zircone et leur coût est nettement inférieur aux billes en zircone, très coûteuses qui sont particulièrement utilisées comme corps de broyage et/ou de dispersion.

Plus précisément, l'invention concerne des billes en céramique frittée ayant la composition chimique suivante, en % massique :

- 5 à 40% $ZrO_2$ + $HfO_2$, de préférence entre 9 et 25 %,
- 0.1 à 10% $Y_2O_3$, de préférence entre 0.5 et 3 %,
- 0.5 à 20% $SiO_2$, de préférence entre 5 et 12 %,
- 40 à 90% $Al_2O_3$, de préférence entre 60 et 85 %, avec un rapport $ZrO_2/SiO_2$ supérieur ou égal à 2, de préférence égal à 2.
- 0 à 5 % d'oxydes facultatifs ($Na_2O$, CaO, MgO, BaO, ...).

Ces billes peuvent être formées par mise en forme à partir d'une barbotine et/ou d'une pâte d'oxydes céramiques, séchées et frittées à des températures entre 1400 et 1700°C, de préférence entre 1500°C et 1600°C.

Dans la suite de l'exposé, lorsqu'il sera question de $ZrO_2$ (zircone), il faudra considérer qu'il s'agit de la somme de ($ZrO_2$ + $HfO_2$). En effet, une certaine quantité de $HfO_2$, chimiquement inséparable de $ZrO_2$, et ayant des propriétés similaires est toujours présente en plus de $ZrO_2$, ceci est bien connu de l'homme de métier.

L'invention est basée sur la réaction de dissociation à haute température du zircon en présence d'alumine. Cette réaction est également bien connue de l'homme de métier :

$$(3+x) \ . \ Al_2O_3 + 2ZrSiO_4 \xrightarrow{\text{haute T°}} x \ . \ Al_2O_3 + 3Al_2O_3 \ . \ 2SiO_2 + 2ZrO_2$$

Les variations de x permettent d'ajuster les proportions volumiques relatives d'alumine ($Al_2O_3$) (si $x \neq 0$), de silicate d'alumine en général et de mullite ($3Al_2O_3.2SiO_2$) en particulier ainsi que de zircone ($ZrO_2$) et donc de modifier les propriétés telles que la dureté, la ténacité et la résistance à l'usure, du composite de céramique frittée final.

La réaction à haute température entre le zircon et l'alumine permet d'obtenir par frittage de poudres pulvérulentes des composites très homogènes dont les phases synthétisées sont intimement dispersées.

Dans un mode d'exécution préféré de l'invention, on ajoute aux réactifs de base de la réaction précédente de l'oxyde d'yttrium ($Y_2O_3$) ce qui permet de stabiliser les formes cristallographiques obtenues à haute température (cubique ou tétragonal) de la zircone.

La zircone subsiste principalement sous forme tétragonale et parfois cubique en faible teneur. Ces états dépendent des quantités d'$Y_2O_3$ introduites. La forme tétragonale est la plus dense des trois variétés allotropiques de la zircone : densité 6.1g/$cm^3$ contre 5.9g/$cm^3$ pour la zircone sous forme cubique et 5.8g/$cm^3$ pour la zircone sous forme monoclinique.

La forme tétragonale provoque également un effet de renforcement mécanique de la matrice dans laquelle elle se trouve. La quantité totale d'$Y_2O_3$, c'est à dire la partie entrant dans la zircone pour la stabiliser et l'excès entrant dans la constitution de la phase silicate (mullite), conduit à des billes plus denses ayant une résistance plus importante aux forces d'impact élevées et à l'usure.

La stabilisation de la zircone permet également d'améliorer la ténacité du composite et d'augmenter la vitesse de dissociation du zircon et donc de diminuer la température de frittage ou la durée du frittage. Cette diminution de la température de frittage ou de sa durée permet d'aboutir à une microstructure plus fine et bien plus avantageuse pour la résistance à l'usure.

Les ingrédients céramiques secs composant les billes de cette invention sont mélangés intimement dans un malaxeur, on peut éventuellement ajouter une certaine quantité d'eau à ce mélange, par exemple pour obtenir une consistance pâteuse, ou pour former une barbotine.

Les constituants mélangés, particulièrement à sec, peuvent être transformés en sphères au moyen d'un disque rotatif de pelletisation ou disque de granulation. La poudre des ingrédients céramique se transforme en sphères par nébulisation d'eau, additionnée d'un ou plusieurs liants organiques, sur le lit tournant des composants solides. La nébulisation est réglée de façon à ce que les billes sortant du disque de pelletisation contiennent entre 18 et 22% d'eau en poids.

## Description du procédé de l'invention

Le procédé de pelletisation pour l'obtention des billes peut être schématisé de la manière suivante :

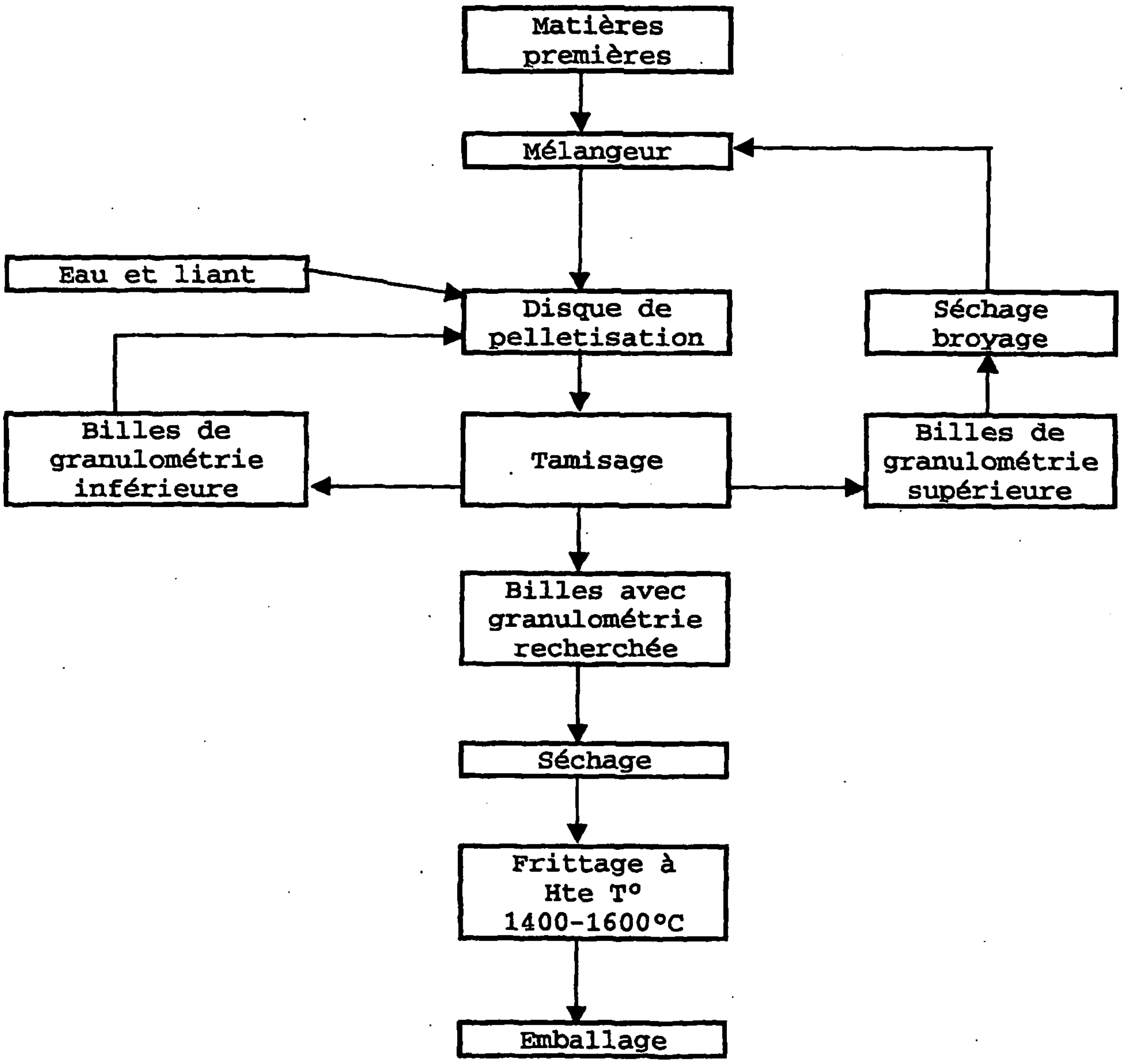


Après formation des sphères, celles-ci subissent un tamisage en trois fractions granulométriques :

a) fraction granulométrique désirée où les billes formées poursuivent le procédé de fabrication jusqu'à leur terme ;
b) fraction granulométrique inférieure à celle désirée où les billes formées retournent sur le disque de pelletisation afin de poursuivre leur croissance ;

c) fraction granulométrique supérieure à celle désirée où les billes formées sont séchées, pulvérisées et renvoyées vers le malaxeur.

La fraction granulométrique désirée (a) est séchée dans une étuve conventionnelle à une température d'environ 110°C jusqu'à ce que les billes aient un taux d'humidité inférieur à 1% en poids.
Les billes séchées sont ensuite chargées dans un four de frittage. Suivant un programme de vitesse de chauffe bien défini, les billes sont frittées à une température entre 1400 à 1600°C.
Après frittage et refroidissement du four, les billes sont conditionnées dans leur emballage et sont prêtes pour l'expédition.
La granulation par sécheur à lit fluidisé est représentée dans le schéma suivant :

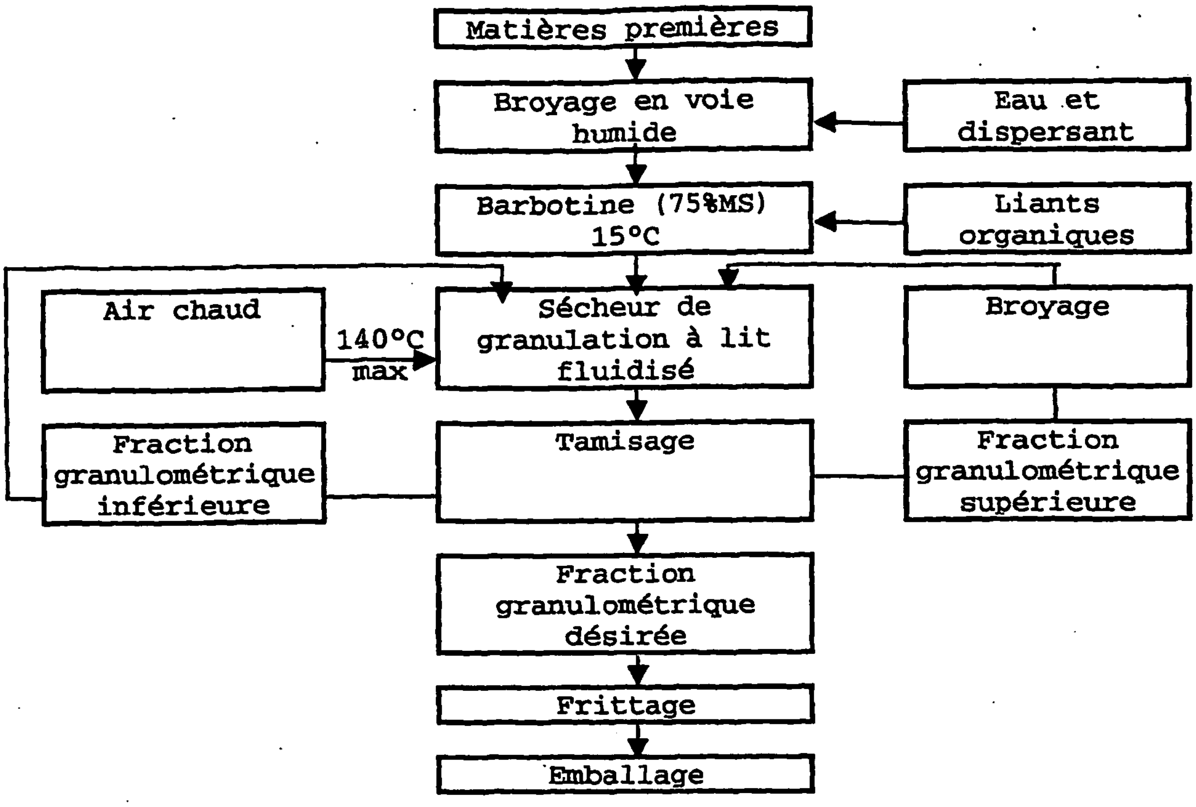


Les ingrédients céramiques composant les billes de cette invention additionnés d'eau et d'un dispersant sont broyés finement dans une proportion de matières sèches allant de 50 à 75%. Après broyage, la barbotine extraite est additionnée de liants organiques (5 à 7%) et mélangée intimement.
A température ambiante, la barbotine est injectée à travers des injecteurs dans un sécheur de granulation à lit fluidisé où elle vient en contact avec les particules solides (germes) fluidisées de même composition que celle de l'invention.
L'air chaud (140°C max.) entrant dans le sécheur évapore l'eau contenue dans la barbotine causant ainsi le dépôt des matières séchées sur les germes. Les dépôts successifs des matières sèches font croître les granules par couche et les transforment en billes. Une fois que les billes atteignent la taille désirée, elles sont enlevées du sécheur.
Après l'extraction du sécheur, les billes subissent un tamisage :

a) les billes de granulométrie inférieure à celle recherchée retournent dans le sécheur pour poursuivre leur croissance dans celui-ci ;
b) les billes de granulométrie supérieure à celle recherchée subissent un broyage et retournent ensuite dans le sécheur pour servir de germes à de futures billes ;
c) les billes de granulométrie recherchée poursuivent le procédé (frittage à haute température, emballage) jusqu'à son terme, comme dans le procédé du point A.

Autres procédés de fabrication

Mise en forme des billes par réaction de gélification :

- Elaboration d'une barbotine, contenant 50 à 75% de matières sèches, à partir des ingrédients céramiques composant les billes de cette invention additionnés d'eau et d'un dispersant.
- Addition à la barbotine d'un polysaccharide naturel : 0.5 à 3% par rapport à la concentration des matières sèches.
- Gélification par coulée, goutte à goutte, de la barbotine à travers un capillaire de différents diamètres dans une solution aqueuse contenant des cations polyvalents. Séparation des billes formées de la solution aqueuse, lavage des billes à l'eau, séchage et frittage à haute température.

Mise en forme des billes par le procédé de moulage par injection (PIM) :

- Elaboration d'une suspension à partir des ingrédients céramiques composant les billes de cette Invention additionnés de liants (cires, polymères) et de surfactants (acide carboxylique comme par ex. acide stéarique, acide oléique, ...
- Chauffage de cette suspension à ± 160°C et injection de celle-ci dans les empreintes des billes contenues dans un moule métallique, préalablement chauffé entre 40 et 60°C.
- Après solidification des billes formées, extraction de celles-ci hors du moule, déliantage des liants suivant un traitement thermique bien défini et frittage des billes à haute température.

**Essais de performance en attriteurs de laboratoire**

Performance des billes de l'invention (alumine-zircone-mullite) pair rapport aux billes d'alumine (A et B), d'alumine-zircone (G et H), de zircone cériée (80% ZrO2 - 20% CeO2, en poids) (C et D), de zircone stabilisée ou partiellement stabilisée à l'oxyde d'yttrium (F), de zircone-silice produites par électrofusion (E).

**1.** Conditions d'essais a et b

***1.1***. Attriteur de laboratoire Netzsch LM4

a) Broyage par recirculation d'une barbotine d'alumine avec 60% en poids de matières sèches et 40% d'eau : Le circuit de broyage est représenté dans la figure 2.

| | |
|---|---|
| Quantité de barbotine broyée (L) | 18 |
| Granulométrie départ de la barbotine $d_{50}$ (μm) | 29,9 |
| Poids alumine (kg) | 19,6 |
| Poids eau (kg) | 13,1 |
| Poids dispersant (kg) Dolapix C64 | 0,2 |
| Poids total de la barbotine (kg) | 32,9 |
| volume utile de la chambre de broyage LM4 (L) | 4,6 |
| Charge billes de broyage → % volume chambre | 70 |
| Poids initial de la charge billes (kg) | = densité en vrac des billes x (4,6x0,70) |
| Débit de la barbotine (kg/h) | 575 |
| vitesse de rotation attriteur LM4 (RPM) | 2100 |

b) Broyage par recirculation d'une barbotine avec 60% de matières sèches (30% en volume d'alumine et 70% en volume de zircone) et 40% d'eau : Circuit de broyage (voir figure 2)

| | |
|---|---|
| Quantité de barbotine broyée (L) | 28,5 |

(suite)

| | |
|---|---|
| Granulométrie départ de la barbotine $d_{50}$ (μm) | 1,25 |
| Poids des matières sèches (kg) | 32,7 |
| Poids eau (kg) | 22,1 |
| Poids dispersant (kg) Dolapix C64 | 0,3 |
| Poids total de la barbotine (kg) | 55,2 |
| Volume utile de la chambre de broyage LM4 (L) | 4,6 |
| Charge billes de broyage → % volume chambre | 82 |
| Poids initial de la charge billes (kg) | densité en vrac des billes x (4,6x0,82) |
| Débit de la barbotine (kg/h) | 575 |
| Vitesse de rotation attriteur LM4 (RPM) | 2000 |

***1.2***. Les échantillons de corps broyants testés.

| Echantillon | Composition | Densité | Coût* | Divulgation |
|---|---|---|---|---|
| A | 94% $Al_2O_3$ | 3.64 | 100 | Commerce |
| B | 90% $Al_2O_3$ | 3.61 | 100 | Commerce |
| C | 80% $ZrO_2$ - 20% $CeO_2$ | 6.24 | 600-700 | Commerce |
| D | 80% $ZrO_2$ - 20% $CeO_2$ | 6.24 | 600-700 | Commerce |
| E | 68% $ZrO_2$ - 31% $SiO_2$ | 3.84 | 80-80 | Commerce |
| F | 95% $ZrO_2$ - 5% $Y_2O_3$ | 6.10 | 1000 | Commerce |
| G | 90% $Al_2O_3$ - 10% $ZrO_2$ | 4.07 | 150-160 | EP0811586A |
| H | 70% $Al_2O_3$ - 30% $ZrO_2$ | 4.40 | 270-280 | EP0811586A |
| Billes de l'invention | 18-50% ($3Al_2O_3.2SiO_2$) 9-25% ($ZrO_2$+$HfO_2$) 25-72% ($Al_2O_3$) | 3.88 | 100 | |
| *(*)* Coût relatif des matières premières- billes de l'invention a la valeur 100. | | | | |

1.3. Méthodologie et critères de performances

Les barbotines sont broyées dans un attriteur du type Netzsch selon le circuit de broyage décrit par la figure 2. Pour chaque échantillon de corps broyants, une barbotine est broyée jusqu'à l'obtention d'une taille de particule (granulométrie) similaire. Durant chaque cycle de broyage, à intervalle régulier (par exemple toutes les heures), des échantillons de barbotine sont prélevés dans le circuit. L'analyse granulométrique de ces prélèvements permet de suivre l'évolution de la taille des particules broyées en fonction du temps de broyage et de l'énergie consommée par l'attriteur. Ces données permettent de déterminer l'équation des courbes des figures 3 à 10 en annexe pour chaque corps broyant testé. La quantité de chaque échantillon de corps broyants à mettre dans l'attriteur est déterminée et pesée précisément pour occuper un volume constant de la chambre de broyage. Ce poids initial ($P_{in}$.) de chaque charge broyante est enregistré.
A chaque fin de cycle de broyage, la chambre de l'attriteur est vidée et la charge broyante est à nouveau pesée précisément pour déterminer le poids final ($P_{fin}$.)
Pour chaque échantillon de corps broyants testé, on tient compte des paramètres intégrés dans les équations suivantes :

- l'équation de la courbe d'évolution de la finesse de la barbotine en fonction du temps de broyage,
- l'équation de la courbe d'évolution de la finesse de la barbotine en fonction de l'énergie consommée par l'attriteur,

- l'enregistrement du poids initial ($P_{in.}$) et du poids final ($P_{fin.}$) des billes dans l'attriteur,
- le coût des matières premières,

Ces équations, vont permettre de comparer les échantillons testés par rapport aux billes de l'invention au niveau de la résistance à l'usure, de l'efficacité de broyage et de l'économie pour l'utilisateur de la manière suivant

a) Performance usure :

- Usure des billes U (gr/kWh) :

$$U = (P_{in.} - P_{fin.}) / Ec$$

La perte en poids des billes dans l'attriteur divisée par l'énergie consommée de l'attriteur (Ec) permet donc de quantifier l'usure réelle pour chaque échantillon de billes testées.
Soit

$U_e$ : usure échantillon de corps broyants
$U_b$ : usure des billes de l'invention

Performance usure = $U_e / U_b$
Un rapport des usures >1 indique que l'échantillon considéré s'use plus que les billes de l'invention.

b) Efficacité de broyage :

- Performance temps
L'équation de la courbe d'évolution de la finesse de la barbotine en fonction du temps de broyage permet de quantifier le temps nécessaire pour obtenir une finesse déterminée ($d_{50}$) de barbotine.
$d_{50}$ ($\mu$m) étant le diamètre moyen des particules de la barbotine.
Soit

$T_e$ : temps de broyage nécessaire pour l'échantillon testé pour obtenir le $d_{50}$
$T_b$ : temps de broyage nécessaire pour les billes de l'invention pour obtenir le $d_{50}$

$$\text{Performance temps} = T_e / T_b$$

Un rapport de temps de broyage >1 indique que l'échantillon considéré va accaparer davantage l'attriteur pour faire le même travail que les billes de l'invention.
- Performance consommation d'énergie
L'équation de la courbe d'évolution de la finesse de la barbotine en fonction de l'énergie consommée par l'attriteur permet de quantifier l'énergie consommée par l'attriteur pour obtenir une finesse déterminée ($d_{50}$) de barbotine.
Soit

$E_e$ : énergie nécessaire pour l'échantillon testé d'obtenir le $d_{50}$
$E_b$ : énergie nécessaire pour billes de l'invention d'obtenir le $d_{50}$

Performance consommation d'énergie = $E_e / E_b$
Un rapport des énergies >1 indique que l'échantillon considéré consomme plus d'énergie que les billes de l'invention pour faire le même travail.
- L'indice d'économie (C)
Pour chaque échantillon, la valeur (Xe) ci-dessous est calculée : $X_e = E_e \times U_e \times M_p$
Avec

$E_e$ : Energie spécifique pour obtenir une finesse déterminée du produit broyé.
$U_{e}$ : Usure des billes.
$M_p$ : Coût relatif des matières premières.

La valeur ($X_e$) évalue un coût de production pour l'utilisateur de corps broyants.
L'indice d'économie : $C = X_e/X_b$
Avec

$X_e$ : coût de production utilisateur des billes échantillon
$X_e$ : idem utilisateur billes de l'invention.

Donc si C >1, l'échantillon concerné est moins économique pour l'utilisateur que les billes de l'invention.

**2**. Résultats

*2.1*. Billes de l'invention par rapport aux billes d'alumine (A et B)

**[0073]** [0071] Suivant conditions d'essais 1.1. a) identiques pour chaque qualité de billes testée.
Diamètre des billes testées : 2 mm
Granulomètrie finale de la barbotine visée : $d_{50}$ environ 0,85 $\mu$m.

a) Performance d'usure

| | Billes de l'invention | A | B |
|---|---|---|---|
| Temps de broyage nécessaire (h) | 7 | 8 | 8.5 |
| Granulométrie finale obtenue $d_{50}$ ($\mu$m) | 0.87 | 0.94 | 0.98 |
| Energie consommée (Kwh) | 34.80 | 31.50 | 33.40 |
| Usure des billes (g/Kwh) | 24.83 | 40.91 | 50.61 |
| Performance d'usure (x plus d'usure) | 1.00 | 1.65 | 2.04 |

b) Performance broyage : Temps de broyage - Energie consommée (voir figures 3 et 4).

Suivant les abaques, pour l'obtention d'une barbotine avec une granulométrie finale d'un $d_{50}$ = 1,0 $\mu$m, les billes de l'invention donnent les performances suivantes :

| | Billes de (l'invention | A | B |
|---|---|---|---|
| Temps de broyage nécessaire (h) | 5.09 | 7.07 | 8.02 |
| Performance temps (x plus d'heures) | 1.00 | 1.39 | 1.57 |
| Energie consommée (Kwh) | 26.13 | 28.12 | 31.67 |
| Performance consommation d'énergie (x plus de Kwh) | 1.00 | 1.08 | 1.21 |
| Indice d'économie (C) | 1 | 1.8 | 2.5 |

Les billes de l'invention sont plus performantes en terme de résistance à l'usure et de performance de broyage. Elles permettent également une capacité de production plus importante par une utilisation moindre de l'attriteur (voir performance temps de broyage). La combinaison des gains usure et des performances broyage pour des coûts de matières premières identiques donne un gain économique substantiel en faveur des billes de l'invention.

*2.2*. Billes de l'invention par rapport aux billes d'alumine-zircone (G et H)

Suivant conditions d'essais 1.1. a) identiques pour chaque qualité de billes testée.

Diamètre des billes testées : 1 mm
Granulométrie finale de la barbotine visée : $d_{50}$ environ 0,85 $\mu$m.

a) Performance d'usure

| | Billes de l'invention | G | H |
|---|---|---|---|
| Temps de broyage nécessaire (h) | 6 | 7 | 8 |
| Granulométrie finale obtenue $d_{50}$ ($\mu$m) | 0.81 | 0.88 | 0.87 |
| Energie consommée (Kwh) | 27.20 | 29.70 | 26.20 |
| Usure des billes (g/Kwh) | 19.29 | 20.59 | 14.41 |
| Performances d'usure (x plus d'usure) | 1.00 | 1.07 | 0.75 |

b) Performance broyage : Temps de broyage - Energie consommée - Coût (voir figures 5 et 6).

Suivant les abaques, pour l'obtention d'une barbotine avec une granulométrie finale d'un $d_{50}$ = 1,0 $\mu$m, les billes de l'invention donnent les performances suivantes :

| | Billes de l'invention | G | H |
|---|---|---|---|
| Temps de broyage nécessaire (h) | 4.03 | 5.56 | 4.81 |
| Performance temps (x plus d'heureà) | 1.00 | 1.38 | 1.19 |
| Energie nécessaire (Kwh) | 18.25 | 23.65 | 20.36 |
| Performance consommation d'énergie (x plus de Kwh) | 1.00 | 1.30 | 1.12 |
| Indice d'économie (C) | 1 | 2.1-2.2 | 2.3 |

Les billes de l'invention ne se distinguent pas particulièrement de l'art antérieur en termes de résistance à l'usure. Elles permettent cependant une capacité de production plus importante par une utilisation moindre de l'attriteur (voir performance temps de broyage) et une consommation moindre d'énergie.
Le critère d'économie montre un gain du simple au double pour les billes de l'invention par rapport à la famille alumine-zircone.

***2.3.*** Billes de l'invention par rapport aux billes de zircone cériée (C et D)

Billes de zircone cériée C et D : 80% ZrO2 - 20% CeO2, en poids.
Suivant conditions d'essais 1.1. a) identiques pour chaque qualité de billes testée.
Diamètre des billes testées : 2 mm
Granulomètrie finale de la barbotine visée : $d_{50}$ environ 0.85 $\mu$m

a) Performance usure

| | Billes de l'invention | C | D |
|---|---|---|---|
| Temps de broyage nécessaire (h) | 7 | 8 | 8 |
| Granulométrie finale obtenue $d_{50}$ ($\mu$m) | 0.87 | 0.97 | 0.87 |
| Energie consommée (Kwh) | 34.80 | 35.60 | 39.00 |
| Usure des billes (g/Kwh) | 24.83 | 31.9 | 25.91 |
| Performance usure (x plus d'usure) | 1.00 | 1.28 | 1.04 |

b) Performance broyage : Temps de broyage - Energie consommée (voir figures 7 et 8).

Suivant les abaques, pour l'obtention d'une barbotine avec une granulométrie finale d'un $d_{50}$ = 1,0 µm, les billes de l'invention donnent les performances suivantes :

| | Billes de l'invention | C | D |
|---|---|---|---|
| Temps de broyage nécessaire (h) | 5.09 | 7.87 | 6.44 |
| Performance temps (x plus d'heure) | 1.00 | 1.55 | 1.27 |
| Energie nécessaire (Kwh) | 28.13 | 35.17 | 31.64 |
| Performance consommation d'énergie (x plus de Kwh) | 1.00 | 1.35 | 1.21 |
| Indice d'économie (C) | 1 | 4.2-4.9 | 7.6-8.8 |

Les billes de l'invention sont plus performantes en terme de résistance à l'usure et de performance de broyage. Elles permettent également une capacité de production plus importante par une utilisation moindre de l'attriteur (voir performance temps de broyage). Les coûts relatifs des matières premières des échantillons C et D sont largement supérieurs à celles des billes de l'invention.
La combinaison de tous ces paramètres donne un gain économique très important en faveur des billes de l'invention.

***2.4***. Billes de l'invention par rapport aux billes de zircone-silice

Billes de zircone-silice E, produites par électrofusion
Suivant conditions d'essais 1.1. a) identiques pour chaque qualité de billes testée.
Diamètre des billes testées : 2 mm
Granulomètrie finale de la barbotine visée : $d_{50}$ environ 0.85 µm

a)Performance usure

| | Billes de l'invention | E |
|---|---|---|
| Temps de broyage nécessaire (h) | 7 | 8 |
| Granulométrie finale obtenue $d_{50}$ (µm) | 0.87 | 1.11 |
| Energie consommée (Kwh) | 34.80 | 39.00 |
| Usure des billes (g/Kwh) | 24.83 | 75.50 |
| Performance usure (x plus d'usure) | 1.00 | 3.04 |

b) Performance broyage : Temps de broyage - Energie consommée (voir figures 9 et 10).

Suivant les abaques, pour l'obtention d'une barbotine avec une granulométrie finale d'un $d_{50}$ = 1,0 µm, les billes de l'invention donnent les performances suivantes :

| | Billes de l'invention | E |
|---|---|---|
| Temps de broyage nécessaire (h) | 5.09 | 10.80 |
| Performance temps (x plus d'heures) | 1.00 | 2.12 |
| Puissance nécessaire (Kwh) | 28.13 | 40.64 |
| Performance consommation d'énoncé (x plus d'énergie) | 1.00 | 1.56 |
| Indice d'économie | 1 | 2.8-3.8 |

Les performances d'usure et de broyage des billes de l'invention compensent la différence de coûts des matières

premières en faveur de l'échantillon E. Du point de vue économique, les billes de l'invention sont à nouveau plus profitables pour l'utilisateur.

***2.5.*** Billes de l'invention par rapport aux billes de zircone

Billes de zircone F, stabilisée ou partiellement stabilisée à l'oxyde d'yttrium.
Suivant conditions d'essais 1.1. b) identiques pour chaque qualité de billes testée.
Diamètre des billes testées : 2 mm
Granulométrie finale de la barbotine visée : $d_{50}$ environ 0,80 $\mu$m

Performance usure et broyage

| | Billes de l'invention | F |
|---|---|---|
| Temps de broyage nécessaire (h) | 3 | 3 |
| Granulométrie finale obtenue $d_{50}$ ($\mu$m) | 0.80 | 0.80 |
| puissance consommée (Kwh) | 13.90 | 14.00 |
| Usure des billes (g/Kwh) | 19.6 | 5.90 |
| Performance usure (x Plus d'usure) | 1.00 | 0.30 |
| Indice d'économie | 1 | 3.03 |

Les billes de l'invention ne sont pas plus performantes en terme de résistance à l'usure. Les performances de broyage sont également identiques.
Le coût matière première de l'échantillon F très élevé n'est cependant pas compensé par les gains d'usure et, donc, les billes de l'invention sont plus économiques pour l'utilisateur.

**Revendications**

**1.** Billes de broyage en céramique frittée comportant les composés suivants (en % massique) :

- 18 à 50% de mullite ($3Al_2O_3.2SiO_2$)
- 9 à 25% de zircone ($ZrO_2 + HfO_2$) stabilisée par 0,5 à 3% d'oxyde de terres rares
- 25 à 72% d'alumine ($Al_2O_3$).

**2.** Billes de broyage en céramique frittée selon la revendication 1, **caractérisées en ce que** lesdites composés sont essentiellement obtenus à partir de matières premières comportant du zircon ($ZrSiO_4$) et de l'alumine ($Al_2O_3$).

**3.** Billes de broyage en céramique frittée selon la revendication 1, **caractérisées en ce que** ladite céramique comprend en outre 1 à 5% en poids d'oxydes sélectionnés parmi le groupe des $Na_2O$, MgO, CaO et BaO.

**4.** Billes de broyage en céramique frittée selon la revendication 1, **caractérisées en ce que** ladite zircone est stabilisée par 0,5 à 3% en poids de $Y_2O_3$.

**5.** Billes de broyage en céramique frittée selon la revendication 1, **caractérisées en ce que** l'analyse chimique (fluorescence X, spectromètre plasma ICP) desdites billes montre la présence des oxydes suivants (en % massique):

- 9 à 25% $ZrO_2 + HfO_2$,
- 0.5 à 3% d'oxydes de terres rares,
- 5 à 12% $SiO_2$,
- 60 à 85% $Al_2O_3$,

avec un rapport $ZrO_2/SiO_2$ supérieur ou égal à 2.

**6.** Billes de broyage en céramique frittée selon la revendication 1, **caractérisées en ce que** leur diamètre se situe entre 0.1 et 100mm.

**7.** Billes de broyage en céramique frittée selon la revendication 1, **caractérisées en ce que** leur diamètre se situe entre 0.5 et 50mm.

**8.** Billes de broyage en céramique frittée selon la revendication 1, **caractérisées en ce que** leur diamètre se situe entre 0.5 et 10mm.

**9.** Procédé de fabrication de billes de broyage en céramique frittée selon la revendication 1, comprenant les étapes suivantes :

- mélange et/ou broyage des matières premières en voie sèche et/ou humide pour constituer une barbotine avec ajouts éventuels de liants et/ou de surfactants organiques;
- passage de ladite barbotine par un moyen ou un procédé de granulation;
- sélection par tamisage des billes obtenues avec reconduction des billes de granulométrie inadéquate en amont via une étape de séchage et/ou de broyage éventuelle vers le mélangeur;
- séchage des billes de granulométrie adéquate ;
- frittage des billes de granulométrie adéquate entre 1400°C et 1600°C suivi d'une étape de conditionnement.

**10.** Procédé de fabrication de billes de broyage en céramique frittée selon la revendication 9, **caractérisé en ce que** lors de l'étape de sélection, les moyens de granulation comprennent des granulateurs à lit fluidisé et des disques de granulation.

**11.** Procédé de fabrication de billes de broyage en céramique frittée selon la revendication 10, **caractérisé en ce que** lors de l'étape de sélection, sur le granulateur, une nébulisation d'eau sur les billes de broyage est réglée de façon à ce que les billes sortant du disque de granulation contiennent entre 18 et 22% d'eau en poids.

**12.** Procédé de fabrication de billes de broyage en céramique frittée selon la revendication 9, **caractérisé en ce que** les procédés de granulation comprennent des procédés de gelification ou des procédés de moulage par injection.

**13.** Procédé de fabrication de billes de broyage en céramique frittée selon la revendication 9, **caractérisé en ce que** lesdits liants organiques sont choisis parmi le groupe des polysaccharides, des polymères thermoplastiques, thermodurcissables ou à base de solvants aqueux ou organiques.

**14.** Procédé de fabrication de billes de broyage en céramique frittée selon la revendication 9, **caractérisé en ce que** lesdits surfactants sont choisis parmi le groupe des acides carboxyliques tels que l'acide stéarique ou l'acide oléique et/ou des polyélectrolytes tels que le polymethylacrilate d'ammonium.

**15.** Utilisation des billes de broyage en céramique frittée selon la revendication 1 pour le broyage de matières minérales ou organiques.

**Claims**

**1.** Grinding balls made of sintered ceramic comprising the following components (in % by weight):

- 18 to 50% mullite ($3Al_2O_3.2SiO_2$)
- 9 to 25% zirconia ($ZrO_2$ + $HfO_2$) stabilised by 0.5 to 3% rare earth oxides
- 25 to 72% alumina ($Al_2O_3$).

**2.** Grinding balls made of sintered ceramic as in Claim 1, **characterised in that** said components are generally obtained from raw materials comprising zircon ($ZrSiO_4$) and alumina ($Al_2O_3$).

**3.** Grinding balls made of sintered ceramic as in Claim 1, **characterised in that** said ceramic further comprises 1 to 5% by weight of oxides selected from the group of $Na_2O$, MgO, CaO and BaO.

**4.** Grinding balls made of sintered ceramic as in Claim 1, **characterised in that** said zirconia is stabilised by 0.5 to

3% by weight of $Y_2O_3$.

**5.** Grinding balls made of sintered ceramic as in Claim 1, **characterised in that** the chemical analysis (X fluorescence, ICP plasma spectrometer) of said balls shows the presence of the following oxides (in % by weight) :

- 9 to 25% $ZrO_2$ + $HfO_2$,
- 0.5 to 3% rare earth oxides,
- 5 to 12% $SiO_2$,
- 60 to 85% $Al_2O_3$,

with a $ZrO_2/SiO_2$ ratio greater than or equal to 2.

**6.** Grinding balls made of sintered ceramic as in Claim 1, **characterised in that** their diameter is between 0.1 and 100 mm.

**7.** Grinding balls made of sintered ceramic as in Claim 1, **characterised in that** their diameter is between 0.5 and 50 mm.

**8.** Grinding balls made of sintered ceramic as in Claim 1, **characterised in that** their diameter is between 0.5 and 10 mm.

**9.** Method of producing grinding balls made of sintered ceramic as in Claim 1, comprising the following stages:

- mixing and/or grinding of the raw materials by a dry and/or wet process so as to form a slurry with possible additions of organic binding agents and/or surfactants;
- passing of said slurry through a means or method of granulation;
- selecting by sieving the balls obtained by returning the balls of inadequate granulometry upstream via a possible drying and/or grinding step to the mixer;
- drying of the balls of correct granulometry;
- sintering of the balls of correct granulometry between 1,400°C and 1,600°C followed by a packaging step.

**10.** Method of manufacturing grinding balls made of sintered ceramic as in Claim 9, **characterized in that** during the selection step, the means of granulation comprise granulators with fluidised beds and granulation discs.

**11.** Method of manufacturing grinding balls made of sintered ceramic as in Claim 10, **characterised in that** during the selection step, on the granulator, a water spraying on the grinding balls is regulated in such a way that the balls coming out of the granulation disc comprise between 18 and 22% of water by weight.

**12.** Method of manufacturing grinding balls made of sintered ceramic as in Claim 9, **characterised in that** the granulation methods comprise gelation methods or injection moulding methods.

**13.** Method of manufacturing grinding balls made of sintered ceramic as in Claim 9, **characterised in that** said organic binding agents are selected from the group of polysaccharides, thermoplastic or thermosetting polymers or polymers based on aqueous or organic solvents.

**14.** Method of manufacturing grinding balls made of sintered ceramic as in Claim 9, **characterised in that** said surfactants are chosen from the group of carboxylic acids such as stearic acid or oleic acid and/or polyelectrolytes such as ammonium polymethylacrylate.

**15.** Use of the grinding balls made of sintered ceramic as in Claim 1 for grinding mineral or organic materials.

**Patentansprüche**

**1.** Mahlkugeln aus Sinterkeramik, das die folgenden Bestandteile enthält (in Massen-%):

- 18 bis 50% Mullit ($3Al_2O_3.2SiO_2$)
- 9 bis 25% Zirkon ($ZrO_2$ + $HfO_2$), stabilisiert durch 0,5 bis 3% Seltenerdoxyd
- 25 bis 72% Aluminium ($Al_2O_3$).

2. Mahlkugeln aus Sinterkeramik gemäß dem Anspruch 1, **dadurch gekennzeichnet, dass** die besagten Bestandteile im Wesentlichen aus Rohstoffen erhalten werden, die Zirkon ($ZrSiO_4$) und Aluminium ($Al_2O_3$) enthalten.

3. Mahlkugeln aus Sinterkeramik gemäß dem Anspruch 1, **dadurch gekennzeichnet, dass** die besagte Keramik darüber hinaus 1 bis 5 Gewichts-% aus der Gruppe der aus $Na_2O$, MgO, CaO und BaO ausgewählten Oxyde enthält.

4. Mahlkugeln aus Sinterkeramik gemäß dem Anspruch 1, **dadurch gekennzeichnet, dass** das besagte Zirkon durch 0,5 bis 3 Gewichts-% von $Y_2O_3$ stabilisiert wird.

5. Mahlkugeln aus Sinterkeramik gemäß dem Anspruch 1, **dadurch gekennzeichnet, dass** die chemische Analyse (Fluoreszenz-X, ICP-Plasmaspektrometer) der besagten Kugeln das Vorhandensein der folgenden Oxyde (in Massen-%) anzeigt:

- 9 bis 25% $ZrO_2$ + $HfO_2$,
- 0,5 bis 3% Seltenerdoxyde,
- 5 bis 12% $SiO_2$,
- 60 bis 85% $Al_2O_3$,

mit einem Verhältnis von $ZrO_2/SiO_2$ größer als oder gleich 2.

6. Mahlkugeln aus Sinterkeramik gemäß dem Anspruch 1, **dadurch gekennzeichnet, dass** ihr Durchmesser zwischen 0,1 und 100 mm liegt.

7. Mahlkugeln aus Sinterkeramik gemäß dem Anspruch 1, **dadurch gekennzeichnet, dass** ihr Durchmesser zwischen 0,5 und 50 mm liegt.

8. Mahlkugeln aus Sinterkeramik gemäß dem Anspruch 1, **dadurch gekennzeichnet, dass** ihr Durchmesser zwischen 0,5 und 10 mm liegt.

9. Verfahren zur Herstellung von Mahlkugeln aus Sinterkeramik gemäß dem Anspruch 1, das die folgenden Schritte umfasst:

- Vermischen und/oder Vermahlen der Rohstoffe im trockenen und/oder feuchten Zustand zur Bildung eines Schlickers mit evtl. Zusatz von organischen Bindemitteln und/oder oberflächenaktiven Substanzen;
- Durchgang des besagten Schlickers durch ein Hilfsmittel oder ein Verfahren zur Granulation;
- Auswahl durch Sieben der erhaltenen Kugeln mit vorgelagerter Rückführung der Kugeln mit unzureichender Teilchengröße über einen Schritt Trocknung und/oder evtl. Vermahlen bis zum Mischer;
- Trocknen der Kugeln mit passender Teilchengröße;
- Sintern der Kugeln mit passender Teilchengröße bei einer Temperatur von zwischen 1400°C und 1600°C, gefolgt von einem Schritt zur Aufbereitung.

10. Verfahren zur Herstellung von Mahlkugeln aus Sinterkeramik gemäß dem Anspruch 9, **dadurch gekennzeichnet, dass** bei dem Schritt zur Auswahl, die Hilfsmittel zur Granulation Granulatoren mit Fließbett und Granulationsscheiben umfassen.

11. Verfahren zur Herstellung von Mahlkugeln aus Sinterkeramik gemäß dem Anspruch 10, **dadurch gekennzeichnet, dass** bei dem Schritt zur Auswahl am Granulator eine Wasserbenebelung auf die Mahlkugeln derart gesteuert wird, dass die aus der Granulationsscheibe austretenden Kugeln einen Wassergehalt von 18 bis 22 Gewichts-% umfassen.

12. Verfahren zur Herstellung von Mahlkugeln aus Sinterkeramik gemäß dem Anspruch 9, **dadurch gekennzeichnet, dass** die Granulationsverfahren Verfahren zur Gelierung bzw. Spritzgussverfahren umfassen.

13. Verfahren zur Herstellung von Mahlkugeln aus Sinterkeramik gemäß dem Anspruch 9, **dadurch gekennzeichnet dass** die besagten organischen Bindemittel aus der Gruppe der Polysaccharide, der thermoplastischen, thermisch härtbaren Polymere bzw. auf Grundlage der wässrigen und organischen Lösemittel gewählt werden.

14. Verfahren zur Herstellung von Mahlkugeln aus Sinterkeramik gemäß dem Anspruch 9, **dadurch gekennzeichnet, dass** die besagten oberflächenaktiven Substanzen aus der Gruppe der Carbonsäuren wie z. B. Stearinsäure oder

Oleinsäure und / oder Polyelektrolyten wie z. B. Ammonium-Polymethylacryl gewählt werden.

**15.** Nutzung der Mahlkugeln aus Sinterkeramik gemäß dem Anspruch 1 für das Mahlen mineralischer oder organischer Materialien.

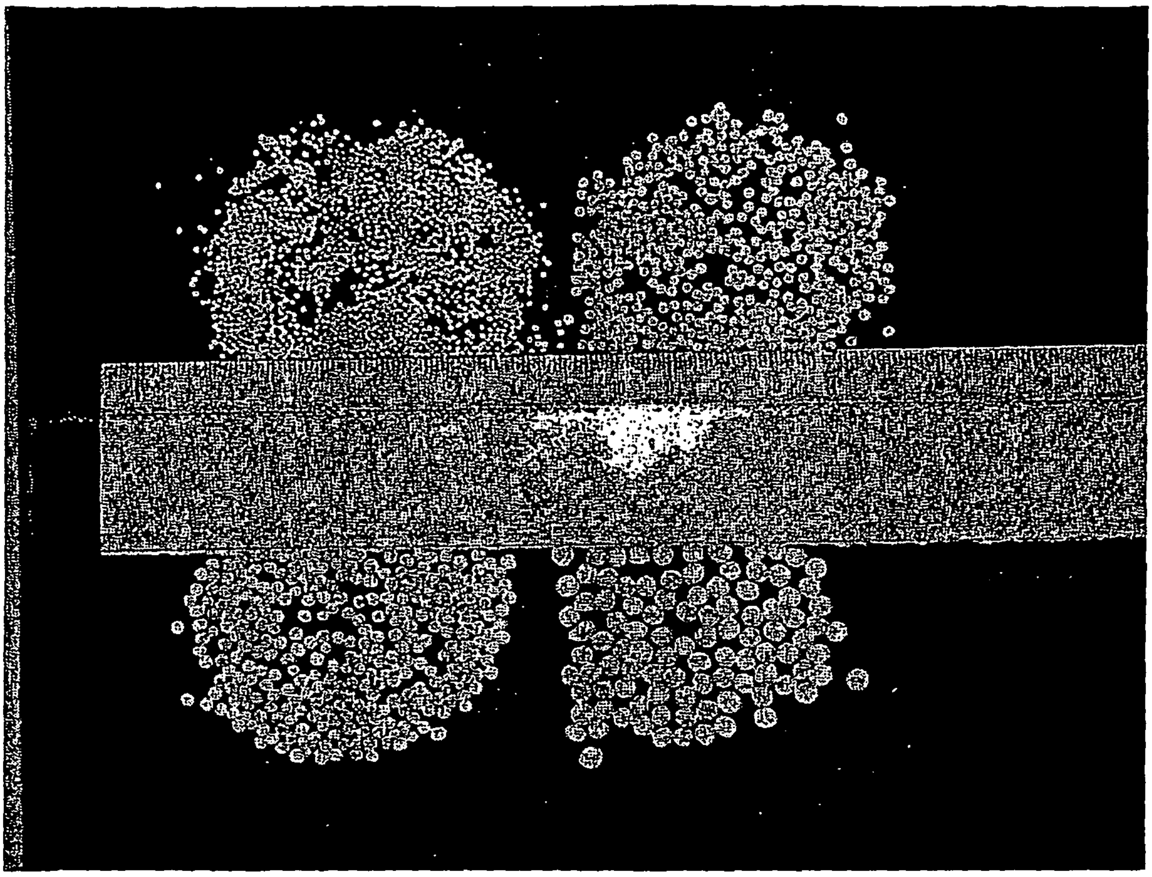

Fig.1

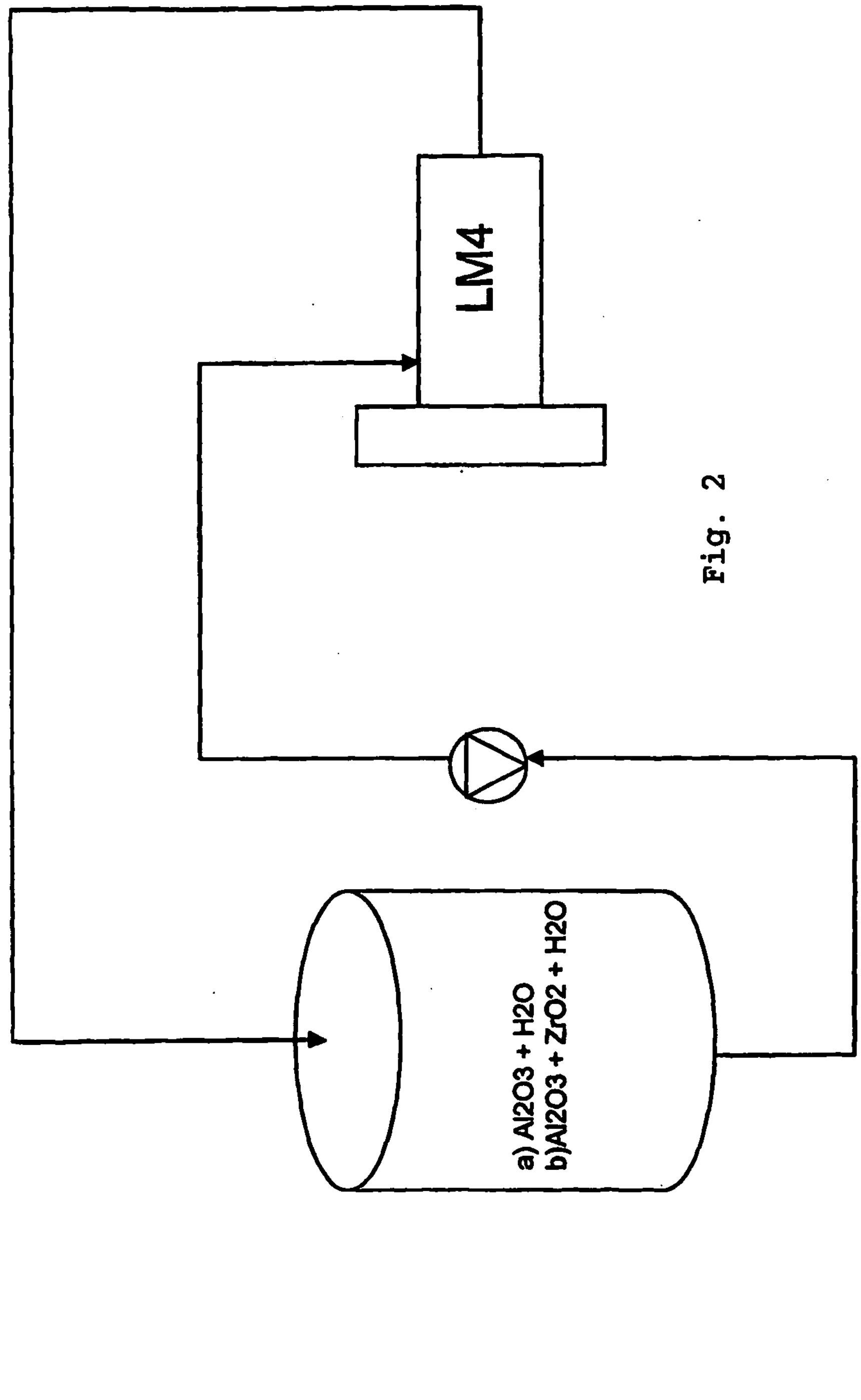


Fig. 2

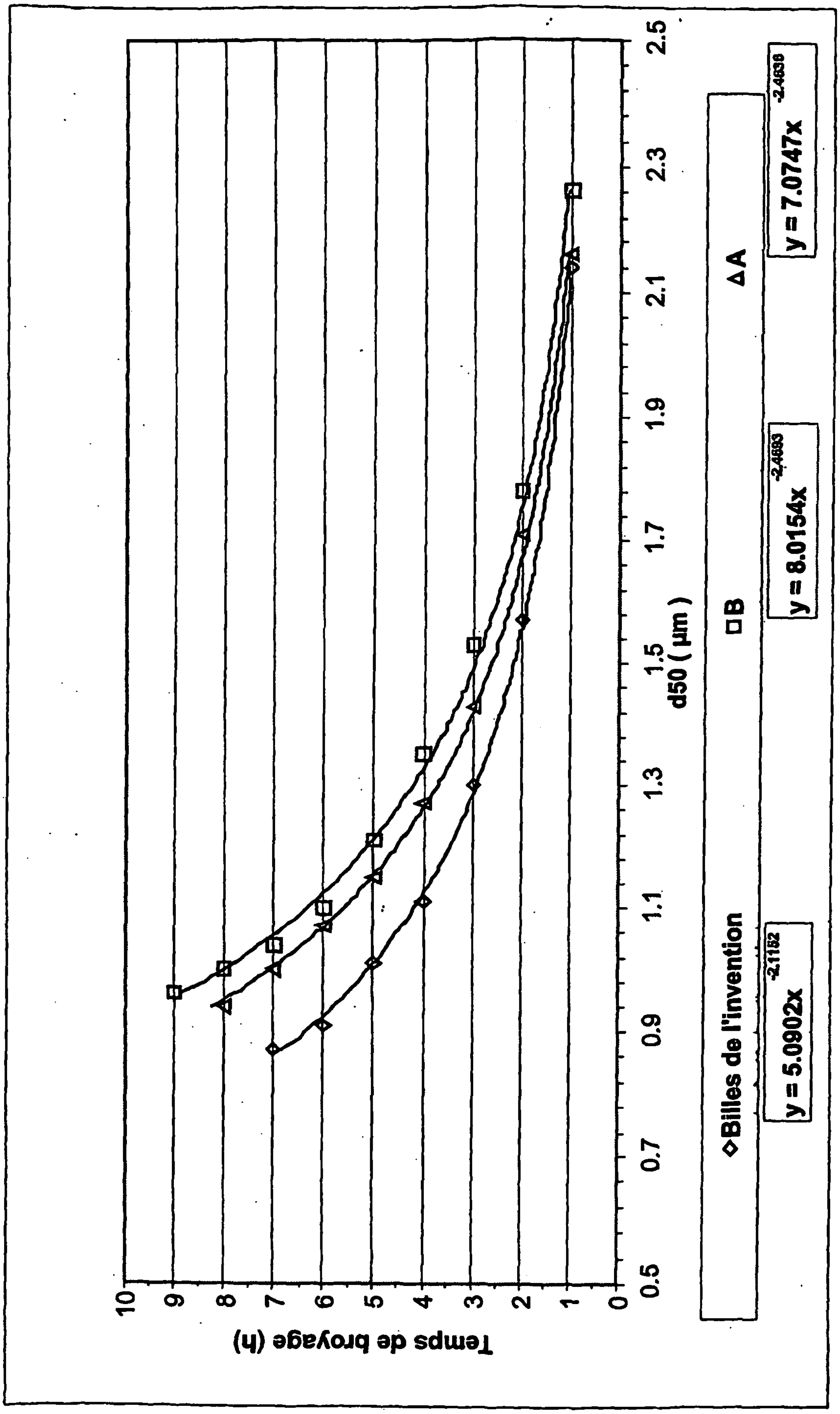
Temps de broyage (h)
d50 ( µm )
◇Billes de l'invention
□B
ΔA
y = 5.0902x^-2.1152
y = 8.0154x^-2.4693
y = 7.0747x^-2.4636

Fig.3

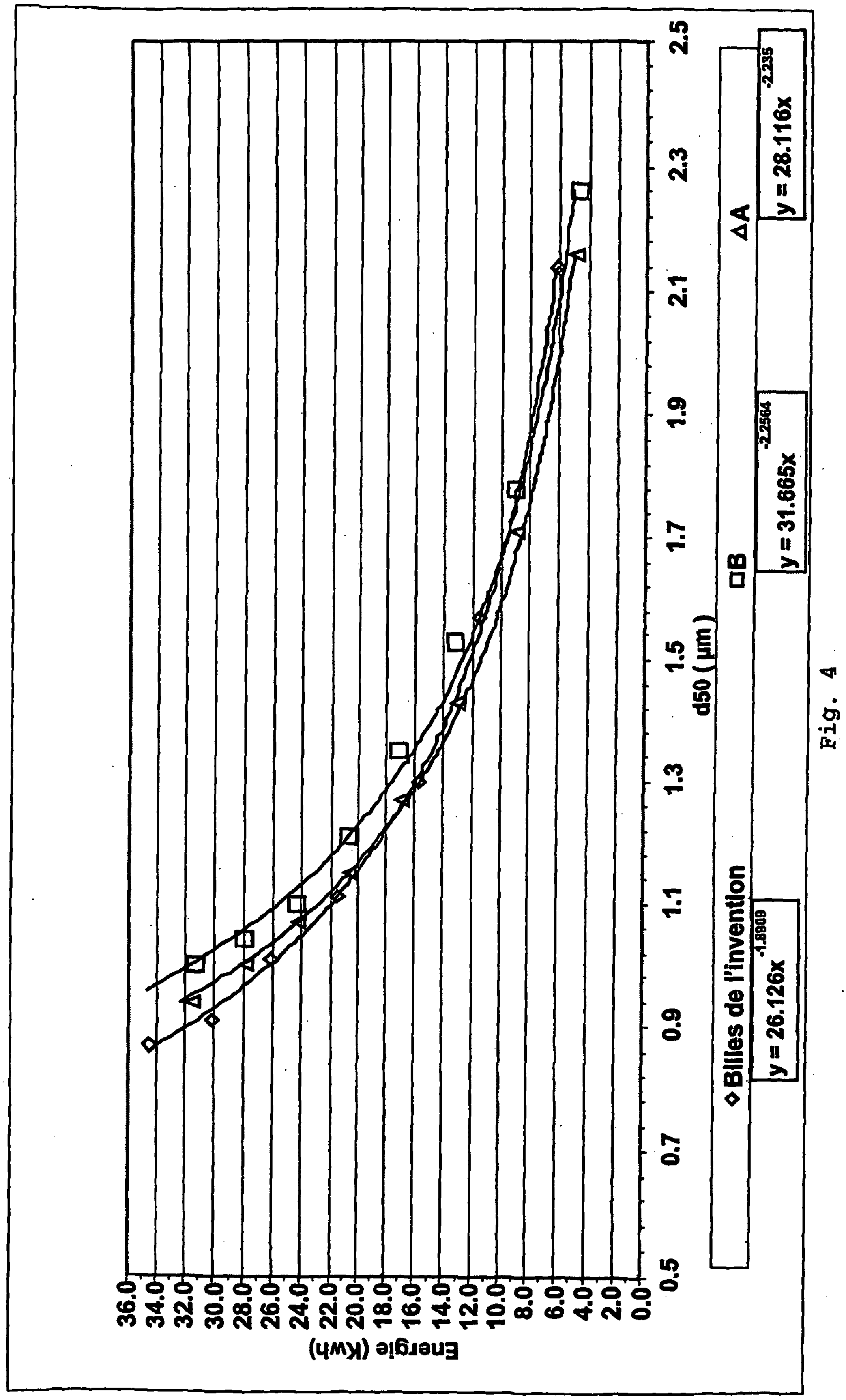

Energie (Kwh)
36.0
34.0
32.0
30.0
28.0
26.0
24.0
22.0
20.0
18.0
16.0
14.0
12.0
10.0
8.0
6.0
4.0
2.0
0.0
0.5
0.7
0.9
1.1
1.3
1.5
1.7
1.9
2.1
2.3
2.5
d50 (µm)
◇ Billes de l'invention
□B
ΔA
$y = 26.126x^{-1.8909}$
$y = 31.665x^{-2.2564}$
$y = 28.116x^{-2.235}$


Fig. 4

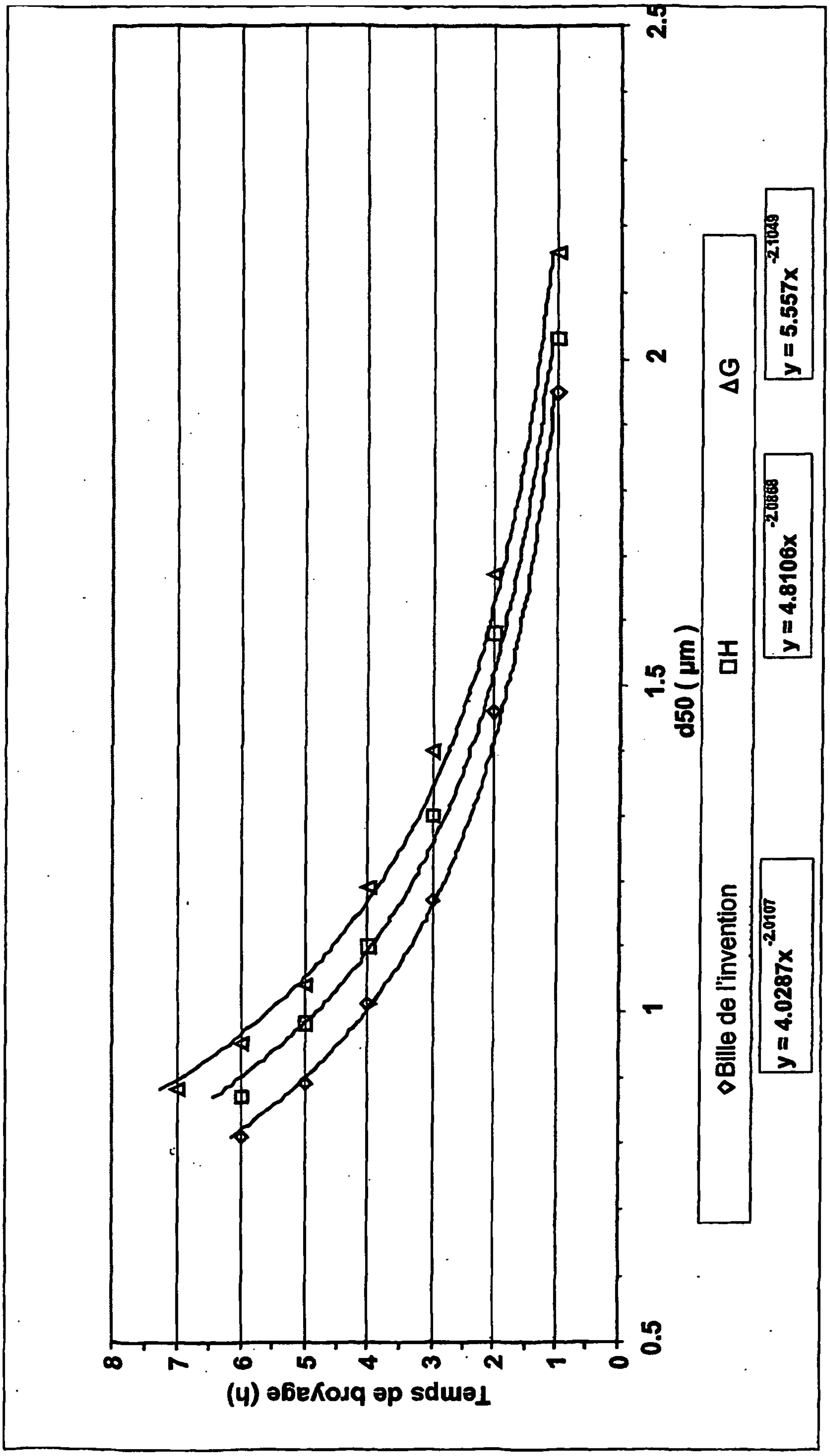
Temps de broyage (h)
d50 ( µm )
◇Bille de l'invention
□H
ΔG
y = 4.0287x^-2.0107
y = 4.8106x^-2.0868
y = 5.557x^-2.1049
0
1
2
3
4
5
6
7
8
0.5
1
1.5
2
2.5

Fig. 5

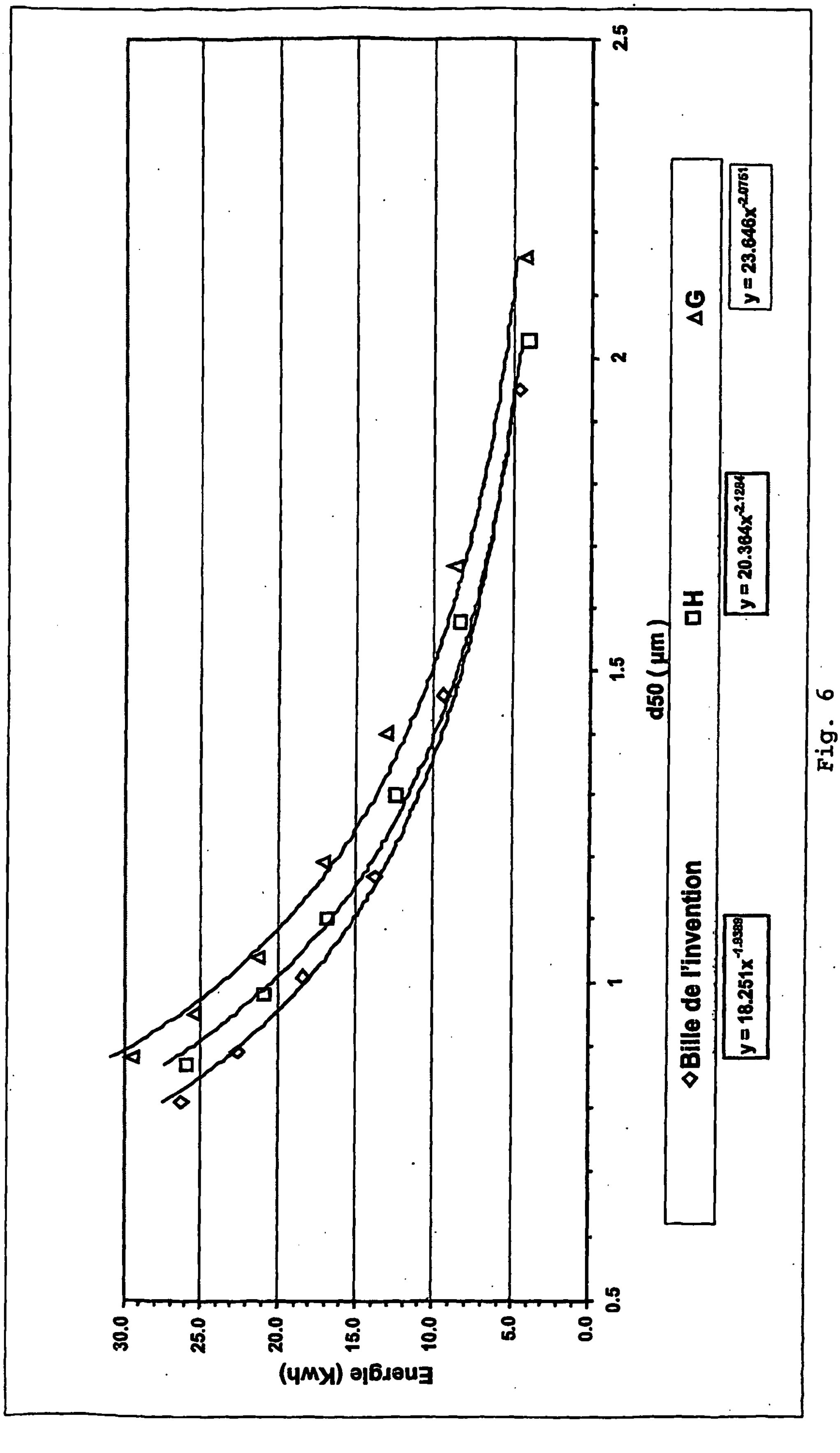
Energie (Kwh)
30.0
25.0
20.0
15.0
10.0
5.0
0.0
0.5
1
1.5
2
2.5
d50 ( µm )
◇Bille de l'invention
□H
ΔG
y = 18.251x^-1.9389
y = 20.364x^-2.1284
y = 23.646x^-2.0761

Fig. 6

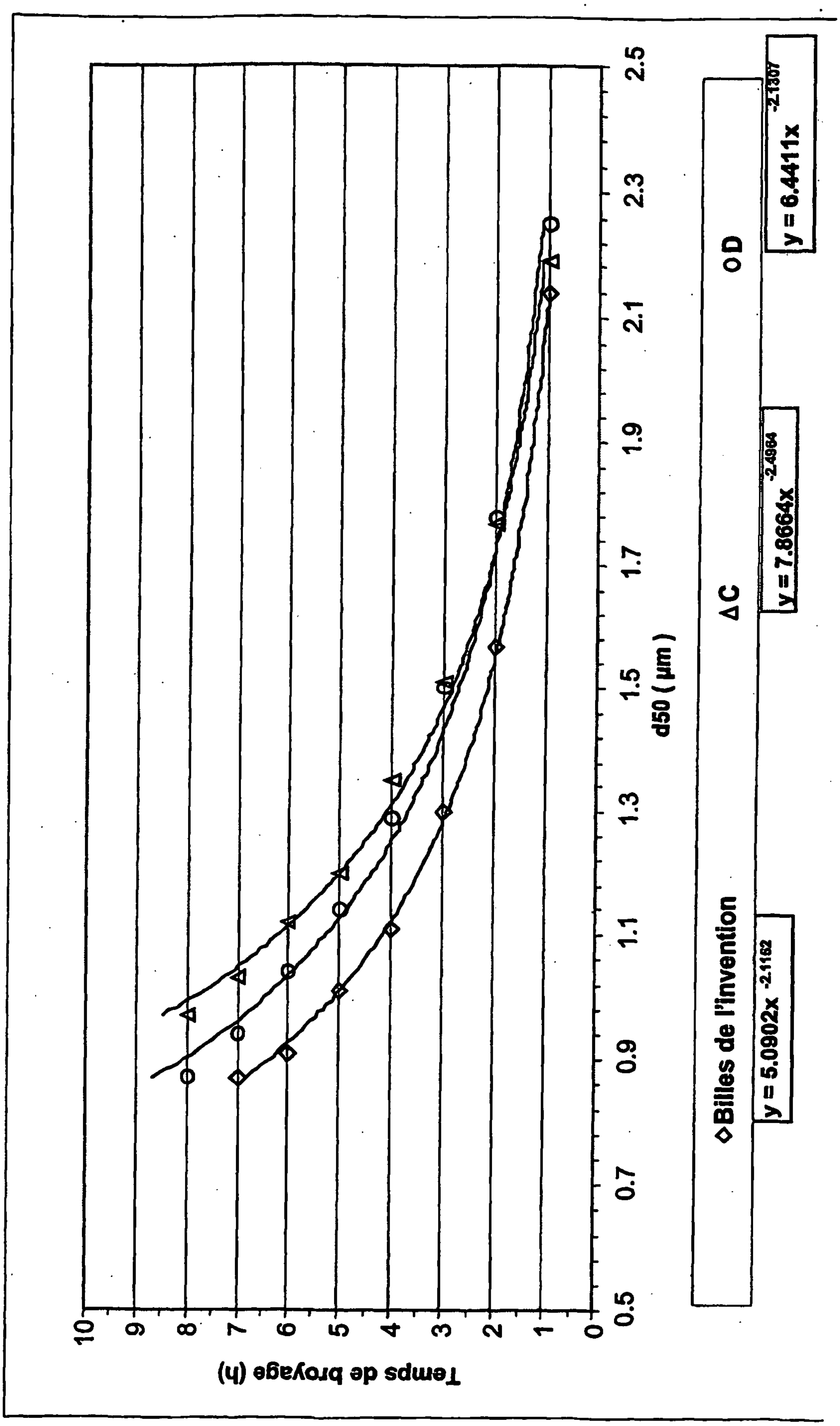

Temps de broyage (h)
d50 ( µm )
◇Billes de l'invention
ΔC
OD
y = 5.0902x -2.1162
y = 7.8664x -2.4964
y = 6.4411x -2.1307


Fig. 7

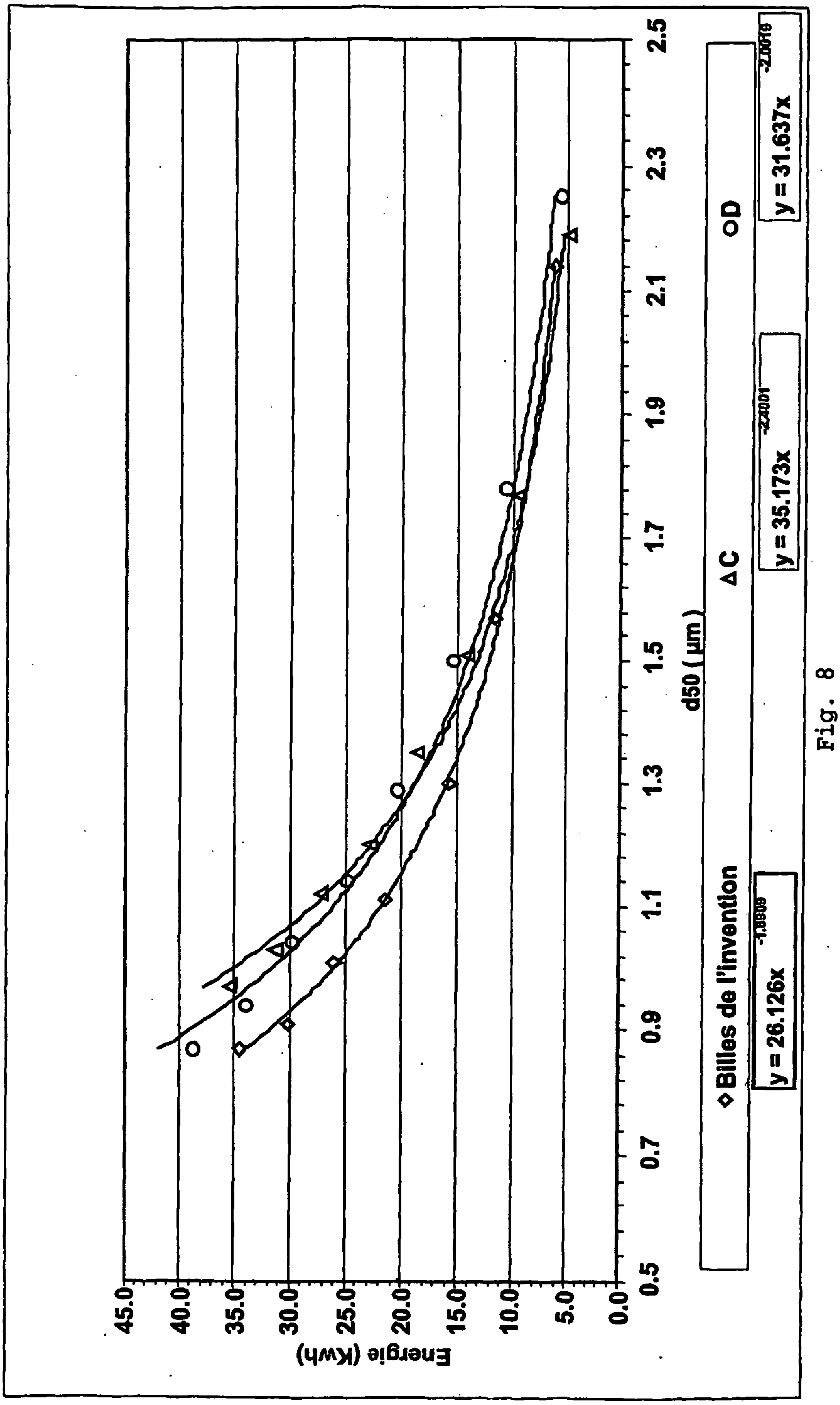
Energie (Kwh)
45.0
40.0
35.0
30.0
25.0
20.0
15.0
10.0
5.0
0.0
0.5
0.7
0.9
1.1
1.3
1.5
1.7
1.9
2.1
2.3
2.5
d50 ( µm)
◇ Billes de l'invention
ΔC
○D
y = 26.126x^-1.8909
y = 35.173x^-2.4001
y = 31.637x^-2.0018

Fig. 8

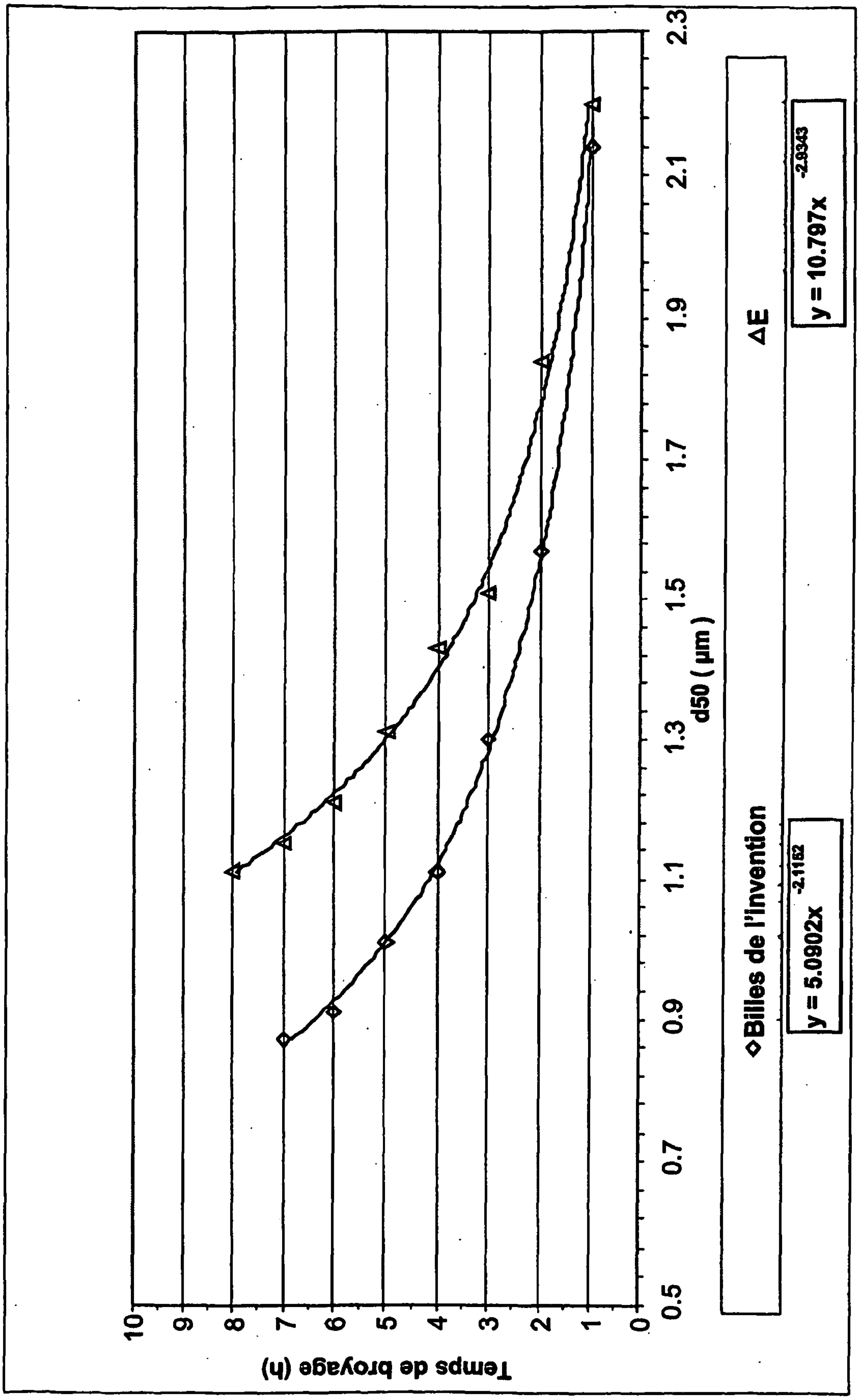
Temps de broyage (h)
0
1
2
3
4
5
6
7
8
9
10
0.5
0.7
0.9
1.1
1.3
1.5
1.7
1.9
2.1
2.3
d50 (µm)
◇Billes de l'invention
ΔE
y = 5.0902x^-2.1152
y = 10.797x^-2.9343

Fig. 9

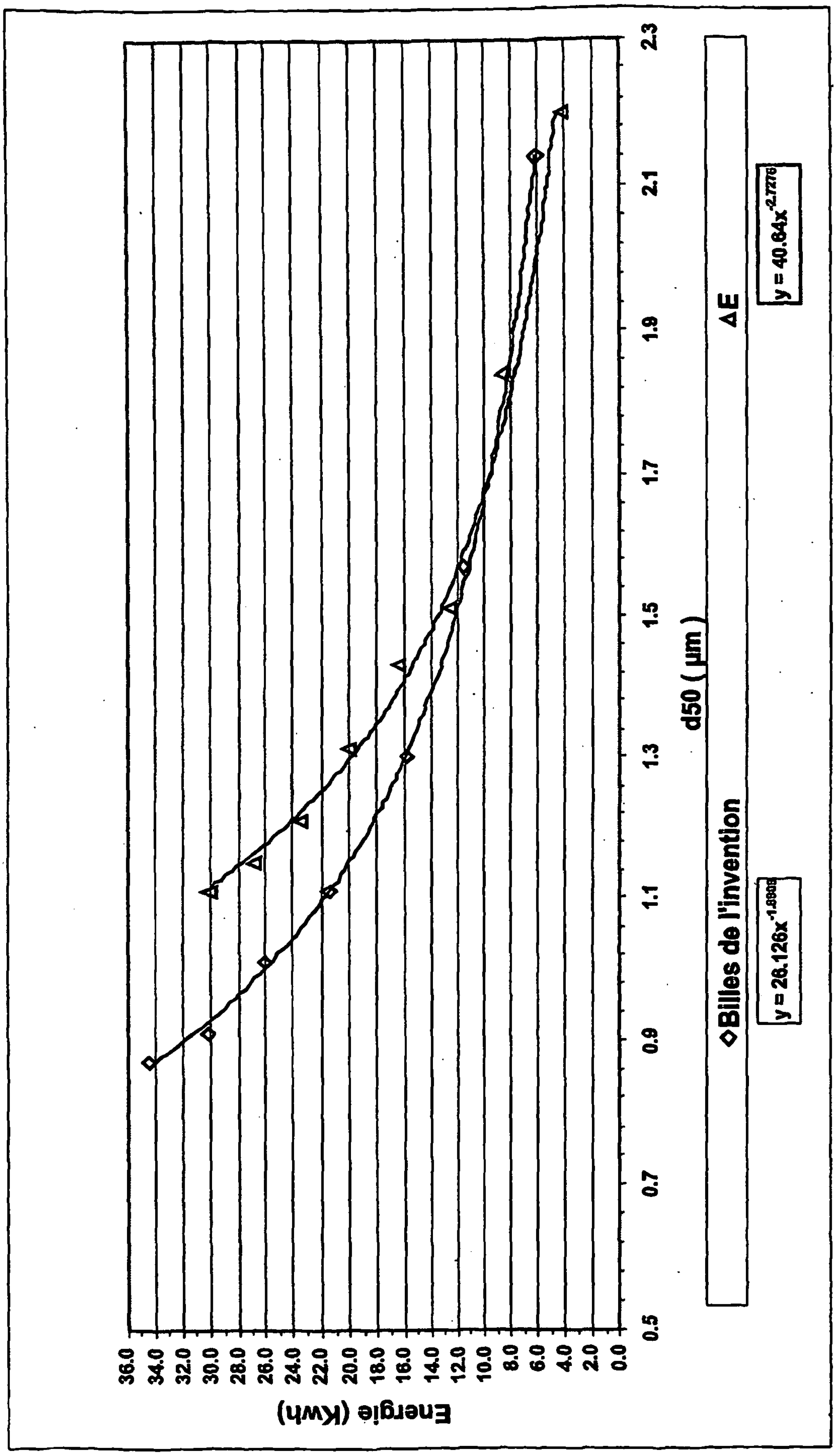

Energie (Kwh)
36.0
34.0
32.0
30.0
28.0
26.0
24.0
22.0
20.0
18.0
16.0
14.0
12.0
10.0
8.0
6.0
4.0
2.0
0.0
0.5
0.7
0.9
1.1
1.3
1.5
1.7
1.9
2.1
2.3
d50 ( µm )
◇Billes de l'invention
y = 28.126x
ΔE
y = 40.64x$^{-2.7276}$


Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3486706 A
- US 5502012 A
- EP 0662461 A1
- EP 1167320 A1


### Littérature non-brevet citée dans la description


- **G. Orange ; F. Cambier.** High temperature mechanical properties of reaction-sintered mullite/zirconia and mullite/alumina/ zirconia composites. *Journal of Materials Science,* 1985, vol. 20, 2533-2540